# EUROPÄISCHE PATENTSCHRIFT

(11) **EP 0 417 343 B1**
(45) Veröffentlichungstag und Bekanntmachung des Hinweises auf die Patenterteilung: **15.06.1994**
(21) Anmeldenummer: 89117006.0
(22) Anmeldetag: 14.09.1989
(51) Int. Cl.: C10B 53/00, C02F 11/10

(54) **Verfahren und Vorrichtung zur Pyrolyse von Klärschlamm und/oder anderen organischen Abfällen**
Process and apparatus for the pyrolysis of sewage sludge and/or other organic wastes
Procédé et appareil de pyrolyse des boues résiduaires et/ou d'autres déchets organiques

(43) Veröffentlichungstag der Anmeldung: 20.03.1991
(73) Patentinhaber: Nemetz, Herbert, D-63450 Hanau (DE)
(72) Erfinder: Nemetz, Herbert, D-63450 Hanau (DE)
(74) Vertreter: Müller-Wolff, Thomas, Dipl.-Ing.

(56) Entgegenhaltungen:
- EP-A- 0 254 024
- DE-C- 687 965
- GB-A- 121 146
- US-A- 3 471 369
- US-A- 4 389 283

## Beschreibung

Die Erfindung betrifft ein Verfahren zur Pyrolyse von Klärschlamm und/oder anderen organischen Abfällen, bei dem das aufzugebende Gut einer Schweltemperatur von etwa 450° C ausgesetzt und so lange behandelt wird, bis es als Koks ausgetragen werden kann, sowie eine Vorrichtung zur Durchfahrung des Verfahrens.

Für alle Betreiber von Abwasserreinigungs-Anlagen ist die Beseitigung des anfallenden Schlammes ein Problem.

Langfristig gesehen, werden die klassischen Beseitigungsmöglichkeiten, wie landwirtschaftliche Verwertung, Kompostierung oder Deponierung, nicht mehr möglich sein.
Der Trend geht eindeutig zur thermischen Behandlung, wie Trocknung, Verbrennung oder Pyrolyse.

Ein Verfahren und eine Vorrichtung zum Schwelen bituminöser Stoffe ist aus der DE-C-687965 bekannt. Dabei wird rieselfähige Kohle kontinuierlich in etagenweise angeordnete Zellenrohre gefördert und durch im Gegenstrom geführte Schwelgase erhitzt, wobei die entstehenden Destillationsgase an den Rohrenden abgezogen werden.

Im Gegensatz zur Trocknung und zur Verbrennung - beide Verfahren haben ihre Problematik -, ist die Pyrolyse eine echte und auch praktikable Alternative, weil:
- durch die niedrige Schweltemperatur von etwa 450°C eine Emission von Schwermetallen über die Gasphase von vornherein nicht möglich ist;
- durch den Zusatz von Kalk im Schlamm auch ein Auswaschen der Schwermetalle aus dem Koks wirksam verhindert wird;
- durch die vollständige Verbrennung des Pyrolysegases durch überstöchiometrische Luftzufuhr gewährleistet ist, daß organische Bestandteile, wie Dioxine und Furane, sicher vernichtet werden;
- die gefilterte Abluft ohne Schaden für die Umwelt in die Atmosphäre abgegeben wird und die Grenzwerte der TA-Luft (BRD) bzw. die etwa adäquaten Werte in anderen Ländern eingehalten werden.

In diesem Zusammenhang liegt ein Bericht "Gegenwärtiger Erkenntnisstand über die Abfallbehandlung durch Pyrolyse" vor, der im Auftrag des Bundesministers des Innern vom Institut für Siedlungswasserbau und Wassergütewirtschaft der Universität Stuttgart im Juli 1974 erstellt wurde. Der Bericht bietet einen zusammenhängenden Überblick, der von Prof.Dr.Ing. O.Tabasaran und Prof. Dr.Ing. K.-H. Hunken bei Sachbearbeitung durch Dipl.-Ing. E.Hock, verfaßt wurde.

Das Dokument ist insbesondere für die interessierten Kommunalbehörden, Ingenieurbüros und Aufbereitungsfirmen bzw. Maschinenfabriken von Bedeutung.
Es basiert in erster Linie auf Untersuchungen an der Müllentgasungsanlage der Firma Pollution Control Ltd., Kalundborg/Dänemark und enthält darüberhinaus eine breite Beschreibung des damals aktuellen Standes der Technik.

Als weitere Grundlagen können Veröffentlichungen und Untersuchungen von Dr. Mönning, Dissertation von 1980, von der Firma BKMI von 1978 von Prof. Dr. Beyer, Universität Tübingen sowie ein Gutachten von Prof. Dr. Lüdewald über die Pyrolyse von Altreifen herangezogen werden.

Trotzdem war in den letzten Jahren kein über diese Veröffentlichungen hinausgreifender technischer Fortschritt erkennbar.

Ein wesentliches Hindernis ist in der Tatsache zu sehen, daß das "Nachrutschen" des Gutes in dem vertikal verlaufenden Turm - betrachtet im Zusammenhang mit den hier gegebenen Höchsttemperaturen - über einen durch die Randanbackungen bedingten, kleiner werdenden Querschnitt erfolgt, wobei neben der Leistungsminderung die Ursache mancher Störungen, insbesondere der Verpuffungsgefahr, zu sehen ist.

Des weiteren arbeiten die bekannten Verfahren kontinuierlich, so daß eine regelbare Verweilzeit des Gutes schon aus diesem Grund nicht mit Sicherheit gegeben ist.
Auch andere Faktoren, wie die relativ ungleichmäßige Schichtstärke des zu pyrolysierenden Gutes, führen zu nicht sicher zu erfassender Wärmezuführung.

Andere Vorrichtungen zur Destillationsgarerzeugung mit rotierender Retorte und einer dieser umgebenden Feuerkammer (DE 26 51 302) befriedigen ebenfalls nicht, da die Abdichtung rotierender Teile im Bereich der hier verwendeten Temperaturen grundsätzlich nicht als störungsfrei zu betrachten sind.

Aufgabe der vorliegenden Erfindung ist es, ein Verfahren und eine Vorrichtung nach der eingangs geschilderten Art derat zu verbessern, daß die Behinderung der vertikalen Förderung im Aufgabebereich so weit als möglich reduziert, der eigentliche Pyrolyseraum vom Aufgabeschacht weitgehend räumlich getrennt und eine genaue Kontrolle bzw. Regelung der Pyrolysebedingungen ermöglicht wird.

Diese Aufgabe wird erfindungsgemäß durch die in den Ansprüche 1 und 9 angegebenen Merkmale gelöst.

Die Umlenkung des Gutes aus dem vertikal gerichteten Turm in einen horizontal, etagenförmig ausgebildeten Pyrolyseraum ermöglicht die Aufgabe von beheizbaren Schichten einheitlicher Höhe, Breite und Länge.

Nach vollständiger Verfüllung wird der Pyrolyseraum ein- und auslaufseitig abgeschlossen und die einzelnen Gutlagen gleichmäßig beheizt, wobei die Schwelgasentnahme einsetzt.

Der Guttransport geschieht dadurch, daß die gesteuerten Schubelemente für die Dosierung und den Einschub des Gutes im wesentlichen als Hohlkolben ausgebildet sind, eine vorwählbare, konstante Höhe aufweisen, in den Pyrolyseschachtbereich einfahren und das Gut in die Einschubetagen des Pyrolyseraumes verdrängen, und anschließend die Schubelemente wieder zurückgeführt werden, um in dieser zurückgezogenen Stellung das nachgeflossene Gut zu erfassen, dieses vorschiebend zu verdrängen, und zwar so lange, bis die Etagen als solche einheitlich verfüllt und die Schubelemente aus ihrer Etagenlage zurückgezogen werden und die Einlaufvorrichtung geschlossen wird.

Diese einfache Mechanik gewährleistet ein Höchstmaß an Sicherheit, so daß antriebs- und steuerungsbedingte Störungen als auf ein Minimum reduziert betrachtet werden können.

Zu der Beheizung ist zu bemerken, daß die durch die Höhe der Schubelemente vorbestimmte, etagenweise Füllhöhe im Pyrolyseraum von unten und oben durch Heizwiderstände, jeweils zum Gut gerichtet, beheizt wird, und daß die Aufheiztemperatur jeweils überwacht und gesteuert wird und diese Steuerung von außerhalb der Anlage möglich ist.

Um einen gleichmäßigen, autarken Betrieb der Anlage zu ermöglichen, ist vorgesehen, daß der zwischen Gasfilter und Wärmekraftmaschine vorgesehene Gaszwischenbehälter in seinem Volumen so abgestimmt ist, daß die Kontinuität des Heizvorganges zwischen den einzelnen Füll- und Entleerungsphasen aufrechterhalten wird.

Die Etagen werden aus in L-förmigen, temperaturfest beschichteten Leitbleche getragenen Schubkasten gebildet, die fluchtend zueinander gerichtet und dabei so dimensioniert sind, daß zwischen zwei parallelen in einer Ebene angeordneten Schubkastenreihen ein Gassammelraum entsteht,
der durch querverlaufende, durch den Abstand zu den Folgeschubkasten in ihrer Breite bestimmte Kanäle beschickt wird, und
daß zwischen den Schubkasten jeder Reihe den Querabzug der Gase nicht behindernde Abstandshalter angeordnet sind.

Zur eigentlichen Ausbildung jedes Schubkastens ist festzuhalten, daß dieser aus einem abgekantetem, über die Breite des Schubkastens führenden Hutprofils gebildet ist, und daß dessen Querseiten ebenfalls durch Abkantflächen geschlossen und verschweißt sind, und
daß das wannenartig ausgebildete Hutprofil nach Einlagerung der nach unten gerichteten Heizwiderstände in die Schamottmasse und nach Anordnung der nach oben gerichteten, unterhalb des Deckels montierten Heizwiderstände diese in die Schamottmasse eingedrückt und der Deckel mit der Hutprofilwanne verbunden wird.

Eine konstruktive Abänderung des Schubkastens für den Ölaustrag ist dadurch gegeben, daß ein mit der Höhe des Schubkastens und seiner Breite korrespondierend bemessenes Rohr verbunden ist, und daß die oben und unten verlaufende Schweißnaht mit den Flächen des Schubkastens und dem Durchmesser des Rohres jeweils eine Ebene bilden, die einen Stau des Gutes im Einzugsbereich der Schubelemente verhindern,
und daß als Zwischenraum zwischen den jeweils nachfolgenden Schubkasten mittig ein über dessen Breite erstreckender Schlitz vorgesehen ist, der durch ein mit seiner Spitze nach unten gerichtetes Winkelprofil als Ölwanne ist und die Schubkastenetage eine Neigung von 1° aufweist.

Zum Abschluß ist noch zu bemerken, daß die korridierenden, im wesentlichen Weißblechteile im Vakuum durch Plasma beschichtet werden.

Das erfindungsgemäße Verfahren wird durch die beigefügten Zeichnungen einer beispielsweisen Ausführung näher erläutert.

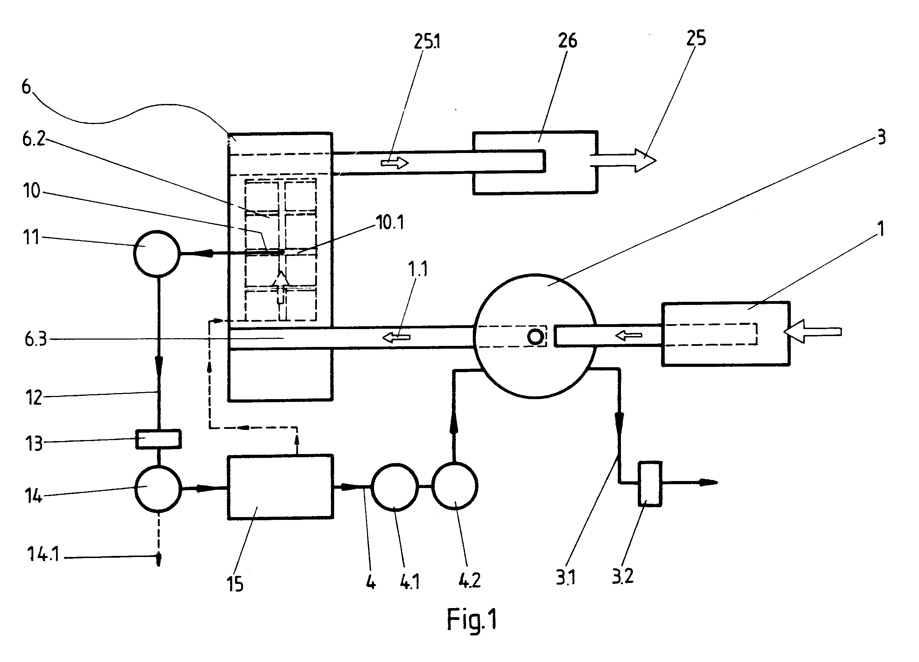

- Figur 1 zeigt: den Grundriß einer Anlage zur Pyrolyse von organischen Abfällen.

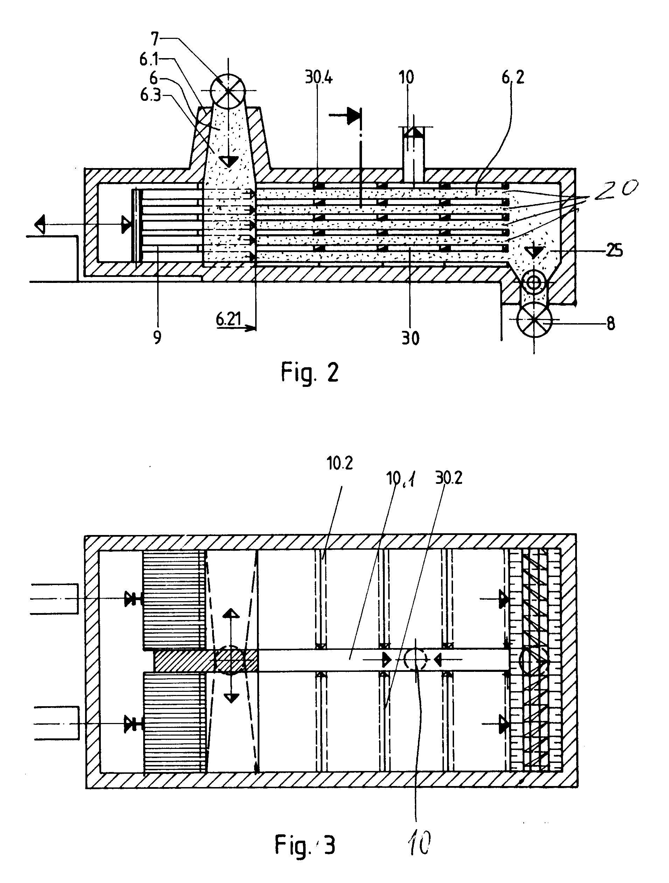

- Figur 2 zeigt: einen Längsschnitt durch den Pyrolysator.

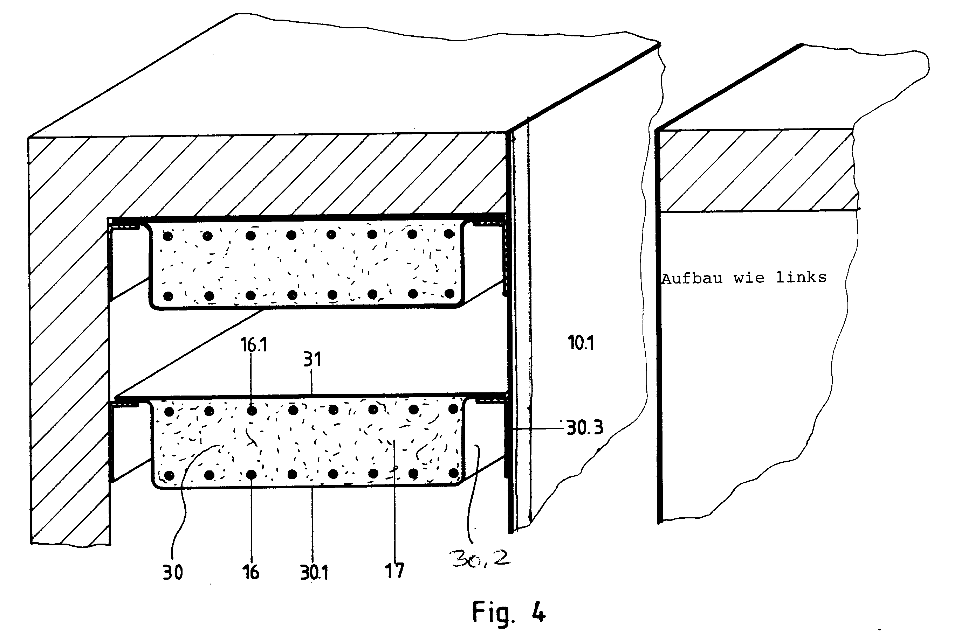

- Figur 3 zeigt: den Grundriß aus Figur 2.
- Figur 4 zeigt: den Schnitt quer zur Längsrichtung der Figur 2.

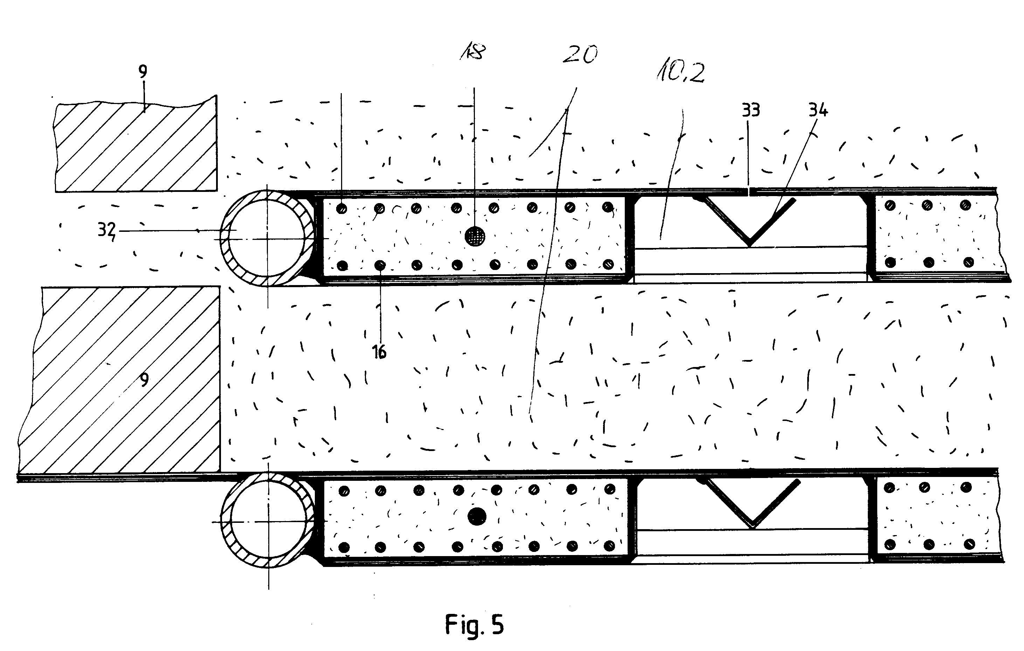

- Figur 5 zeigt: den ersten Schubkasten einer Reihe mit einer getrennten, durch im Rohr widerstandsarmen Einführung der Schubelemente in einen in eine Ölwanne führenden Schlitz.

Der anfallende Schlamm wird unter Zusatz von Kalk in einer Kammerfilterpresse entwässert. Der entwässerte Schlamm 1.1 muß zerkleinert einem vorgesehenen Stapelraum 1 aufgeben werden. Der Stapelraum 1 dient zum Ausgleich der unterschiedlichen Verarbeitungszeiten.
Aus dem Stapelraum 1 wird der Schlamm 1.1 über eine mit Bandabzug ausgerüstete Dosierrinne chargenweise dem Vortrockner 3 aufgegeben, von dem das Gut 1.1 in den vertikalen Turm 6.1 des Pyrolysators 6 aufgegeben wird.

Ob und inwieweit auf diesem Weg das Gut 1.1 weiteren Aufbereitungsprozessen, insbesondere einer Zerkleinerung unterzogen werden muß, ist, von Fall zu Fall betrachtet,verschieden. Die Möglichkeit dafür muß vorgesehen werden.

Des weiteren ist ebenfalls vor dem Vortrockner 3 ein nicht gezeichneter Mischer vorzusehen, in dem möglicherweise Sägemehl und eventuell ein Koksanteil so miteinander vermischt werden, daß der für die Vortrocknung vorgesehene Feststoffanteil gewährleistet wird.

Die Einlaufvorrichtung 7, die in diesem Fall eine Zellenradschleuse darstellt, schließt in der gezeichneten Darstellung den vertikal gerichteten Turm 6.1 nach außen luft- und gasdicht ab,
wobei diese Stellung gleichzeitig den gasdichten Verschluß der Auslaufvorrichtung und die vollständige Verfüllung des Pyrolyseraumes 6.2 ausweisen muß, der im weiteren durch die Einfüllzone 6.3 und die zurückgezogenen, steuerbaren Schubelemente 9 bis 9ff und den horizontale gegliederten Pyrolyseschachtbereich 6.21 als begrenzt betrachtet werden kann.

Der Vorgang für diesen jetzt beschriebenen Status sieht vor, daß bei abgeschlossener Auslaufvorrichtung 8 durch die hydraulisch gesteuerten Schubelemente 9 bis 9ff das Gut 1.1 eingeschoben ist, wobei der Einschub jeweils so lange wiederholt wird, bis die Etagen des durch die Schubkasten 30 bis 30ff gebildeten Pyrolyseraumes 6.2 durch Nachführung frischen Gutes 1.1 verfüllt sind und die Einlaufvorrichtung 7 ebenfalls abgesperrt ist. Die gleichmäßige Beschickung mit frischem Gut kann durch Drucksensoren überwacht werden.

Für die Heizung ist festzuhalten, daß im eigentlichen Pyrolyseraum 6.2 die durch die Schubelemente 9 bis 9ff mit Gut 1.1 gefüllten Etagen von unten und oben durch die Heizwiderstände 16 der Schubkasten 30 bis 30ff beheizt werden, wobei die Aufheiztemperatur auf ca. 450°C , jeweils außerhalb der Anlage, durch Sensoren 16.3 überwacht und gesteuert werden kann.

Der letzte Teilbereich der Etagen 20 bis 20ff wird im Interesse einer angemessenen Kühlzeit für den Koks nicht weiter beheizt.
Nach Ablauf einer vorbestimmten Verweilzeit werden die Ein- und Auslaufvorrichtung 7 und 8 so lange geöffnet, bis das dann verkokte Material 25 durch Nachführung, d.h. Verdrängung des frischen Gutes, ausgebracht ist und die Auslaufvorrichtung 8 wieder abgeschlossen wird.
Nach erneuter Verfüllung kann bei abgeschlossener Ein- und Auslaufvorrichtung 7 und 8 die chargenweise Wiederholung dieses Vorganges stattfinden.

Es ist dabei möglich, durch die Schubelemente 9 bis 9ff mehrere, zusammengefaßte Etagen 20 bis 20ff zu verfüllen und dem thermischen Prozeß zu unterziehen, die Etagen wieder zu verfüllen und thermisch in gleicher Weise zu behandeln.

Der Betrieb des Pyrolysators 6 kann, abgesehen von einer Anfahrtzeit, autark betrachtet werden.
Die durch den Schwelvorgang, d.h. durch die Beheizung des Gutes 1.1 durch elektrische Heizwiderstände 16 sich entwickelnden Gase, werden aus dem Pyrolyseraum 6.2 und aus horizontalen Schwelgassammelräumen 10.1 geführt und in einer gemeinsamen Sammelleitung 10 zusammengefaßt werden, die über eine in der Regel als Sauggebläse 11 ausgebildete Gasleitung 12 und einen nachgeordneten Gaszwischenbehälter 14 zu einer Wärmekraftmaschine 15 führt.

Die durch den Generatorteil gewonnene Leistung wird nach Wandlung in elektrische Energie den Heizwiderständen 16 des Pyrolyseraumes 6.2 zugeleitet, während die Vorwärmung des Vortrockners 3 durch die Abgase der Wärmekraftmaschine 15 über die Abgasleitung 4, ein zugeordnetes Regelorgan 4.1 mit einer Luftbeimischung 4.2 erfolgt und die Naßgase aus dem Vortrockner 3 über die Naßgasleitung 3.1 und den Naßluftfilter 3.2 in die Atmosphäre führen.

Zu dem Gaszwischenbehälter 14 ist zu erwähnen, daß dieser in seinem Volumen so abgestimmt ist, daß die Kontinuität des Heizvorganges zwischen den einzelnen Füll- und Entleerungsvorgängen aufrechterhalten werden kann.
Es ist zweckmäßig, daß der Gaszwischenbehälter 14 zusätzlich mit einer druckgesteuerten Abfackelvorrichtung 14.1 versehen wird.

Zur Ausbildung der Etagen 20 bis 20ff des Pyrolyseraumes 6.2 wird vermerkt, daß deren Höhe durch die aneinandergereihten Schubkasten 30 bis 30ff gebildet werden, wobei diese in L-förmigen, temperaturfest beschichteten Leitprofilen 30.3, die fluchtend zueinander ausgerichtet sind, getragen werden, und dabei so dimensioniert sind, daß zwischen zwei parallelen Schubkastenreihen, wie erwähnt, ein Gassammelraum entsteht, der durch quer verlaufende, zu den Folgeschubkasten in ihrer Breite bestimmten Kanälen 30.2 beschickt wird.

Zwischen den Schubkasten 30 sind Abstandshalter angeordnet, die den Querabzug der Gase nicht behindern, z.B. L-Profilabschnitte 30.4.

Der eigentliche Schubkasten 30 wird jeweils aus einem abgekanteten, über die Breite des Schubkastens führenden Hutprofil 30.1 gebildet, dessen Querseiten ebenfalls durch Abkantflächen 30.2 geschlossen und verschweißt sind.
Das Hutprofil 30.1 wird durch einen verschweißten oder auch verschraubten Deckel 31, nach Einlagerung der nach unten gerichteten Heizwiderstände 16, in einer Schamottmasse 17 und nach Anordnung der nach oben gerichteten Heizwiderstände 16.1, die, unterhalb des Deckels 31 und mit diesem an einzelnen Stellen verbunden sind, in die Schamottmasse 17 eingerdrückt und der Schubkasten 30 und der Deckel 31 geschlossen werden.

Der aus dem Pyrolysator 6 ausgetragene Koks wird über eine Aufgaberinne 25.1 mit Stahlbandabzug in einen Bunker 26 transportiert.

### Stückliste

- 1: Stapelraum
- 1.1: Schlamm (Gut)
- 3: Vortrockner
- 3.1: Naßleitung
- 3.2: Naßluftfilter
- 4: Abgasleitung
- 4.1: Regelorgan
- 4.2: Luftbeimischung
- 6: Pyrolysator
- 6.1: Turm
- 6.2: Pyrolyseraum
- 6.3: Einfüllzone
- 6.21: Pyrolyseschachtbereich
- 7: Einlaufvorrichtung
- 8: Auslaufvorrichtung
- 9: Schubelemente
- 10: Sammelgasleitung
- 10.1: Schwelgassammelraum
- 10.2: Schwelgaskanal
- 11: Sauggebläse
- 12: Gasleitung
- 12.1: Gasleitung
- 13: Gasfilter
- 14: Gaszwischenbehälter
- 14.1: Abfackelvorrichtung
- 15: Wärmekraftmaschine
- 16: Heizwiderstand
- 17: Schamottmasse
- 18: Sensor
- 20: Etagen
- 25: verkoktes Material
- 25.1: Aufgaberinne mit Stahlbandabzug
- 26: Bunker
- 30: Schubkasten
- 30.1: Hutprofil
- 30.2: Kanal
- 30.3: Leitprofil
- 30.4: U-Profilabschnitt (Abstandshalter)
- 31: Deckel
- 32: Rohr
- 33: Schlitz
- 34: Winkelprofil

## Patentansprüche

1. Verfahren zur Pyrolyse von Klärschlamm und/oder anderen organischen Afällen, bei dem das aufzugebende Gut einer Schweltemperatur von etwa 450 °C ausgesetzt und solange behandelt wird, bis es als Koks ausgetragen werden kann,
dadurch gekennzeichnet,
daß das Gut (1.1) aus der vertikalen Richtung in im wesentlichen horizontal verlaufende, gleichbeabstandete Schichten mit vorbestimmter Höhe, Breite und Länge umgelenkt und in horizontaler Verlängerung der Ebene der Einfüllzone (6.3) eines Turmes (6.1) unter Druck in die elektrisch beheizten Etagen (20) des Pyrolyseraumes (6.2) eindosiert wird,
daß nach Ablauf einer vorbestimmbaren Verweilzeit die Ein- und Auslaufvorrichtung (7, 8) so lange geöffnet wird, bis das dann verkokte Material (25) durch Nachführung frischen Gutes (1.1) ausgebracht ist und die Auslaufvorrichtung (8) wieder abgesperrt wird,
daß nach erneuter Verfüllung bei abgeschlossener Einlauf- und Auslaufvorrichtung (7, 8) der Pyrolysevorgang wiederholt wird, wobei die dabei entstehenden Pyrolysegase über einen Schwelgassammelraum (10.1), eine Sammelgasleitung (10) und einen nachgeordneten Gaszwischenbehälter (14) abgesaugt werden und zu einer Wärmekraftmaschine (15) überführt werden, die die gewonnene Leistung nach Wandlung in elektrische Energie den Heizwiderständen (16) des Pyrolyseraumes (6.2) zuleitet.

2. Verfahren nach Anspruch 1,
dadurch gekennzeichnet,
daß die im wesentlichen als Hohlkolben ausgebildeten Schubelemente (9) in einer einstellbaren, konstanten Höhe in den Pyrolyseschachtbereich (6.21) einfahren und das Gut (1.1) in die Einschubetagen (20) des Pyrolyseraumes (6.2) verdrängen,
daß anschließend die Schubelemente (9) wieder zurückgeführt werden, um in dieser zurückgezogenen Stellung das nachgeflossene Gut (1.1) zu erfassen und dieses vorschiebend zu verdrängen, bis die Etagen (20) einheitlich verfüllt sind, und
daß die Schubelemente (9) aus ihrer Etagenlage zurückgezogen werden und die Einlaufvorrichtung (7) geschlossen wird.

3. Verfahren nach einem der vorhergehenden Ansprüche,
dadurch gekennzeichnet,
daß der Pyrolyseraum (6.2) durch jeweils zum Gut (1.1) gerichtete Heizwiderstände (16) beheizt wird und daß die Aufheiztemperatur hierbei überwacht und gesteuert wird, wobei die Steuerung in Abhängigkeit von der durch die Höhe der Schubelemente (9) vorbestimmten, etagenweisen Füllhöhe im Pyrolyseraum erfolgt.

4. Verfahren nach Anspruch 1 oder 2,
dadurch gekennzeichnet,
daß der zwischen Gasfilter (13) und Wärmekraftmaschine (15) vorgesehene Gaszwischenbehälter (14) in seinem Volumen so abgestimmt ist, daß die Kontinuität des Heizvorganges zwischen den einzelnen Füll- und Entleerungsphasen aufrechterhalten wird.

5. Verfahren nach einem der Ansprüche 1 bis 4,
dadurch gekennzeichnet,
daß das Gut (1.1) durch eine Kammerfilterpresse vor der Eingabe in den Vortrockner entwässert wird.

6. Verfahren nach Anspruch 5,
dadurch gekennzeichnet,
daß in das entwässerte Gut (1.1) Kalk zugegeben wird.

7. Verfahren nach Anspruch 5 oder 6,
dadurch gekennzeichnet,
daß vor der Pyrolyse zu dem Gut (1.1) Sägemehl oder ein anderer Kohlenstoffträger zugegeben wird und mit dem Gut (1.1) vermengt wird.

8. Verfahren nach einem der vorhergehenden Ansprüche,
dadurch gekennzeichnet,
daß bei ölhaltigen Klärschlämmen die bei der Pyrolyse anfallenden Öle vom verkokten Material (25) getrennt werden.

9. Vorrichtung zur Pyrolyse von Klärschlamm und/oder anderen organischen Abfällen,
dadurch gekennzeichnet,
daß die Vorrichtung an der Rohgutaufgabeseite einen Vortrockner (3) aufweist, der mit den Abgasen aus der Pyrolyse bzw. einer Wärmkraftmaschine beheizbar ist, daß der Vortrockner (3) mit einem vertikal angeordneten Aufgabeturm (6.1) verbunden ist, an den eine gasdichte Einlaufvorrichtung (7) angeschlossen ist,
daß die Vorrichtung aus elektrisch beheizten Etagen (20) besteht, die durch Schubkästen (30) oben und mit Ausnahme der untersten Etage auch unten begrenzt werden, wobei diese Schubkästen (30) in L-förmigen, temperaturfest beschichteten Leitprofilen (30.3), die fluchtend zueinander ausgerichtet sind, getragen werden und dabei eine Schubkastenreihe bilden, in der die einzelnen Schubkästen (30) durch den Querabzug der Gase nicht behindernde Abstandshalter (30.4) auf Abstand gehalten werden, wobei zwischen parallelen in einer Ebene angeordneten Schubkastenreihen ein Gassammelraum gebildet wird (10.1), der durch quer verlaufende, durch den Abstand zu den Folgeschubkästen (30) in ihrer Breite bestimmte Kanäle (10.2) beschickt wird.

10. Vorrichtung nach Anspruch 5,
dadurch gekennzeichnet,
daß jeder Schubkasten (30) aus einem abgekanteten, über die Breite des Schubkastens (30) führenden Hutprofil (30.1) gebildet ist, dessen Querseiten (30.2) ebenfalls durch Abkantflächen geschlossen und verschweißt sind und
daß das wannenartig ausgebildete Hutprofil (30.1) nach Einlagerung der nach unten gerichteten Heizwiderstände (16) in die Schamottmasse (17) und nach Anordnung der nach oben gerichteten, unterhalb des Deckels (31) montierten Heizwiderstände (16) diese in die Schamottmasse (17) eingedrückt und der Deckel (31) mit der Hutprofilwanne verbunden wird.

11. Vorrichtung nach Anspruch 9 oder 10,
dadurch gekennzeichnet,
daß alle aus Weißblech gefertigten Vorrichtungsteile im Vakuum plasmabeschichtet sind.

## Claims

1. A process for the pyrolysis of sewage sludge and/or other organic wastes, in the case of which the material to be fed in is subjected to a carbonisation temperature of approximately 450 °C and continues to be treated until it can be removed in the form of coke,
characterised in
that the material (1.1) is deflected from the vertical direction into substantially horizontally extending, equally spaced layers of a predetermined height, width and length and, in a horizontal extension of the plane of the feeding zone (6.3) of a tower (6.1), under pressure, metred and introduced into the electrically heated tiers (20) of the pyrolysis chamber (6.2); that after a predetermined holding time, the input and output devices (7, 8) are opened until the material (25) which by then is coked is removed by feeding in fresh material (1.1), whereupon the output device (8) is locked again; that after refilling said pyrolysis chamber, with the input and output devices (7, 8) in the closed condition, the pyrolysis process is repeated, the resulting pyrolysis gases being sucked out by a low temperature carbonisation gas collecting chamber (10.1), a gas collecting pipeline (10) and a subsequent intermediate gas container (14) and transferred to a thermoelectric generator (15) which transfers the recovered power to the heating resistances (16) after having converted same to electric energy.

2. A process according to claim 1,
characterised in
that the thrust elements (9) substantially designed as hollow pistons move into the pyrolysis shaft region (6.21) at an adjustable constant height and displace the material (1.1) into the tiers (20) of the pyrolysis chamber (6.2); that subsequently, the thrust elements (9) are withdrawn to enable them, in said withdrawn position, to take hold of the follow-up material (1.1) and displace it while moving it forward until the tiers (20) are filled to a uniform level; and that the thrust elements (9) are withdrawn from the tiers and that the input device (7) is closed.

3. A process according to any one of the preceding claims,
characterised in
that the pyrolysis chamber (6.2) is heated by heating resistances (16) facing the material (1.1) and that the heating temperature is monitored and controlled, such control procedures taking place as a function of the filling level of the individual tiers in the pyrolysis chamber predetermined by the height of the thrust elements (9).

4. A process according to claim 1 or 2,
characterised in
that the volume of the intermediate gas container (14) provided between the gas filter (13) and the thermoelectric generator (15) is adjusted in such a way that the continuity of the heating process between the individual filling and emptying phases is maintained.

5. A process according to any one of claims 1 to 4,
characterised in
that prior to being fed into the pre-drier, the material (1.1) is dewatered by a chamber filter press.

6. A process according to claim 5,
characterised in
that lime is added to the dewatered material (1.1).

7. A process according to claim 5 or 6,
characterised in
that before pyrolysis takes place, saw dust or any other carbon carrier is mixed with the material (1.1).

8. A process according to any one of the preceding claims, characterised in
that in the case of oil-containing sewage sludge, the oils recovered during pyrolysis are separted from the coked material (25).

9. A process for the pyrolysis of sewage sludge and/or other organic wastes,
characterised in
that at the end where the raw material is introduced, the device comprises a pre-drier (3) which may be heated by the exhaust gases of the pyrolysis or by a thermoelectric generator, that the pre-drier (3) is connected to a vertically arranged feeding tower (6.1) which in turn is connected to a gas-proof input device (7), that the device consists of electrically heated tiers (20) which, at the top and - with the exception of the lowest tier - also at the bottom, are delimited by drawers (30) supported in L-shaped, temperature-resistant, coated guiding profiles (30.3) arranged so as to be in alignment relative to one another and forming a row of drawers where the individual drawers (30) are spaced by spacers (30, (4) which do not obstruct the transverse extraction of the gases, and that between parallel rows of drawers arranged in one plane there is formed a gas collecting chamber (10.1) which is fed by transversely extending channels (10.2) whose width is determined by their distance from the subsequent drawers (30).

10. A device according to claim 5,
characterised in
that each drawer (30) is formed by a bevelled hat profile (30.1) which extends over the width of the drawer (30) and whose transverse sides (30.2) are also closed and welded together by bevelled faces and that, after incorporating the downwardly extending heating resistances (16) into the fireclay mass (17) and after positioning the upwardly extending heating resistances (16) fitted below the cover (31), the tub-like hat profile (30.1) presses said heating resistances into the fireclay mass (17), with the cover (31) being connected to the hat profile tub.

11. A device according to claim 9 or 10,
characterised in
that all parts of the device produced of tinplate are plasma-coated in a vacuum.

## Revendications

1. Procédé pour pyrolyser des boues résiduaires et/ou d'autres déchets organiques, dans lequel la matière à introduire est exposée à une température de carbonisation d'environ 450 °C et est traitée jusqu'à ce qu'elle puisse être déchargée sous forme de coke,
caractérisé en ce que :
la matière (1.1) change de direction en venant d'une direction verticale pour arriver dans des couches, essentiellement horizontales, équidistantes, ayant une hauteur, une largeur et une longueur pré-définies, et est introduite dans le prolongement horizontal du plan de la zone d'introduction (6.3) d'une tour (6.1), sous pression, dans les étages (20), chauffés électriquement, de la chambre de pyrolyse (6.2),
après écoulement d'un certain temps de séjour prédéfini, on ouvre le dispositif d'introduction et le dispositif d'évacuation (7,8) jusqu'à ce que la matière (25) qui est alors cokéfiée, soit déchargée après apport de matière fraîche (1.1), et jusqu'à ce que le dispositif d'évacuation (8) soit de nouveau fermé ;
après un nouveau remplissage, le dispositif d'entrée et le dispositif d'évacuation (7,8) étant fermés, on répète l'opération de pyrolyse, les gaz de pyrolyse qui se forment à cette occasion étant aspirés par l'intermédiaire d'une chambre collectrice des gaz de carbonisation (10.1), d'une conduite collectrice de gaz (10) et d'un réservoir intermédiaire de gaz (14) installé en aval, pour être envoyés à une machine thermique (15), qui envoie l'énergie récupérée après conversion en énergie électrique aux résistances chauffantes (16) de la chambre de pyrolyse (6.2).

2. Procédé selon la revendication 1, caractérisé en ce que les éléments pousseurs (9) constitués essentiellement de pistons creux, pénètrent, sur une hauteur constante et réglable, dans la zone du puits de pyrolyse (6.21), en refoulant la matière (1.1) dans les étages d'introduction (20) de la chambre de pyrolyse (6.2) ;
en ce que les éléments pousseurs (9) sont ensuite ramenés en arrière pour, dans cette position rentrée, intercepter la matière (1.1) arrivant ensuite et refouler cette dernière en la poussant vers l'avant, jusqu'à ce que les étages (20) soient uniformément remplis ; et
en ce que les éléments pousseurs (9) sont ramenés vers l'arrière à partir de leur position, le dispositif d'introduction (7) étant alors fermé.

3. Procédé selon l'une des revendications précédentes, caractérisé en ce que la chambre de pyrolyse (6.2) est chauffée par des résistances chauffantes (16) dont chacune est dirigée vers la matière (1.1), et en ce que la température de chauffage est alors surveillée et commandée, la régulation étant effectuée en fonction de la hauteur de chargement par étages dans la chambre de pyrolyse, cette hauteur étant pré-définie par la hauteur des éléments pousseurs (9).

4. Procédé selon la revendication 1 ou 2, caractérisé en ce que le réservoir intermédiaire de gaz (14), prévu entre le filtre à gaz (3) et la machine thermique (15), a un volume adapté de façon à garantir la continuité de l'opération de chauffage entre les différentes phases de remplissage et de vidange.

5. Procédé selon l'une des revendications 1 à 4, caractérisé en ce que la matière (1.1) est, avant de pénétrer dans le préchauffeur, déshydraté dans un filtre presse à plateaux.

6. Procédé selon la revendication 5, caractérisé en ce qu'on introduit de la chaux dans la matière déshydratée (1.1).

7. Procédé selon la revendication 5 ou 6, caractérisée en ce que, avant la pyrolyse, on ajoute à la matière (1.1) de la sciure ou un autre support carboné, et on les mélange à la matière (1.1).

8. Procédé selon l'une des revendications précédentes, caractérisé en ce que, dans le cas des boues résiduaires contenant de l'huile, on sépare de la matière cokéfiée (25) les huiles obtenues lors de la pyrolyse.

9. Dispositif pour pyrolyser des boues résiduaires et/ou d'autres déchets organiques, caractérisé en ce que le dispositif comporte, sur le côté introduction de la matière brute, un pré-sécheur (3) qui peut être chauffé par les effluents gazeux provenant de la pyrolyse ou d'une machine thermique ;
en ce que le préchauffeur (3) est relié à une tour de chargement verticale (6.1), à laquelle est raccordé un dispositif d'introduction (7) étanche aux gaz ;
en ce que le dispositif est constitué d'étages (20) électriquement chauffés, qui sont limités par des tiroirs (30) à leur partie supérieure et également à l'exception de l'étage le plus bas, à leur partie inférieure, ces tiroirs (30) étant portés dans des profilés (30.3), en forme de L, revêtus d'un revêtement réfractaire, en regard les uns des autres et en alignement et de ce fait, forment une rangée de tiroirs, dans laquelle les différents tiroirs (30) sont maintenus à distance par un écarteur (30.4), non représenté, situé dans la partie d'évacuation transversale des gaz, et que l'on forme, entre les rangées de tiroirs parallèles disposées dans un plan, un espace collecteur de gaz, qui est alimenté grâce à des gaines (10.2), courant transversalement, et dont la largeur est définie par leur distance aux tiroirs successifs (30).

10. Dispositif selon la revendication 5, caractérisé en ce que chaque tiroir (30) est formé d'un profilé en chape (30.1), biseauté, courant sur toute la largeur du tiroir (30), profilé dont les côtés transversaux (30.2) sont eux aussi fermés et soudés par des phases biseautées ; et
en ce que le profilé en chape (30.1), conçu comme une cuve, et après insertion, dans la masse réfractaire (17), des résistances chauffantes (16) dirigées vers le haut, et une fois que l'on a mis en place les résistances chauffantes (17) dirigées vers le haut, montées en-dessous du couvercle (31), enfonce ces dernières dans la masse réfractaire (17), le couvercle (31) étant relié à la cuve en profilé en chape.

11. Dispositif selon la revendication 9 ou 10, caractérisé en ce que tous les éléments du dispositif, réalisés en fer blanc, sont revêtus par une technique de revêtement sous vide au plasma.
